# EUROPEAN PATENT SPECIFICATION

(11) **EP 3 374 128 B1**
(45) Date of publication and mention of the grant of the patent: **30.12.2020**
(21) Application number: 15908022.5
(22) Date of filing: 10.11.2015
(51) Int. Cl.: B25J 9/16, B24B 27/00, B24B 51/00, B24B 9/00, G05B 19/4093, G05B 19/416

(54) **A METHOD AND SYSTEM FOR MACHINING, AND A ROBOT SYSTEM**
VERFAHREN UND SYSTEM ZUM BEARBEITEN UND ROBOTERSYSTEM
PROCÉDÉ ET SYSTÈME POUR USINAGE, ET SYSTÈME ROBOTIQUE

(43) Date of publication of application: 19.09.2018
(73) Proprietor: ABB Schweiz AG, 5400 Baden (CH)
(72) Inventor: MAO, Lei, Shanghai 201318 (CN); CHENG, Shaojie, Shanghai 201601 (CN); DONG, Diamond Daimeng, Shanghai 200061 (CN)
(74) Representative: Zimmermann & Partner Patentanwälte mbB
(86) International application number: PCT/CN2015/094177
(87) International publication number: WO 2017/079892

(56) References cited:
- EP-A2- 0 421 618
- WO-A1-2017/054130
- CA-A1- 2 407 248
- CN-A- 101 774 048
- JP-A- H07 132 435
- US-A- 5 827 020

## Description

### FIELD OF THE INVENTION

The present invention relates to a method and system for machining, and more particularly, to a method for machining a work piece with a tool and a robot system using the same.

### BACKGROUND OF THE INVENTION

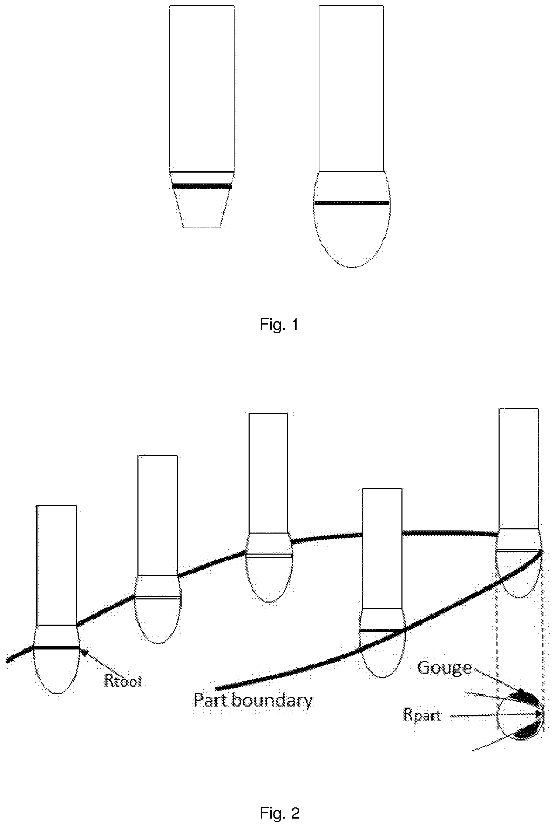

In modern machining, (see e.g. WO 2017/054130 A1, JP H07 132435 A) more and more work pieces tend to have free-form surfaces or boundaries, which brings a lot of challenges to handle. While in most applications such as deburring, side-machining, the tips of the machining tools are in a revolving shape and different radii in different heights are usually used, as shown in Fig. 1.

Generally, a fixed point or part of a machining tool is programmed to work along the whole tool path during the machining process. This means that the contact point is fixed and unavailable for customization. To change the contact point on the machining tool for a specific path, users have to manually modify the point, which is low in both efficiency and accuracy. In addition, for the feed rate in the machining process, although it is related to the contact point on the tool with different contact diameters, users have to specify it separately.

Therefore, using default and fixed contact point on a tool in the machining process may cause the following problems.

Firstly, low machining efficiency. Generally, the machining efficiency is proportional to the tool diameter. The larger the cutter diameter is, the higher the machining efficiency is achieved. In the cases that have no collisions, users prefer to use as larger contact diameter as possible during the machining, so that they would like to customize the contact point on the tool to achieve higher machining efficiency. Relatively, using fixed contact point will bring low machining efficiency.

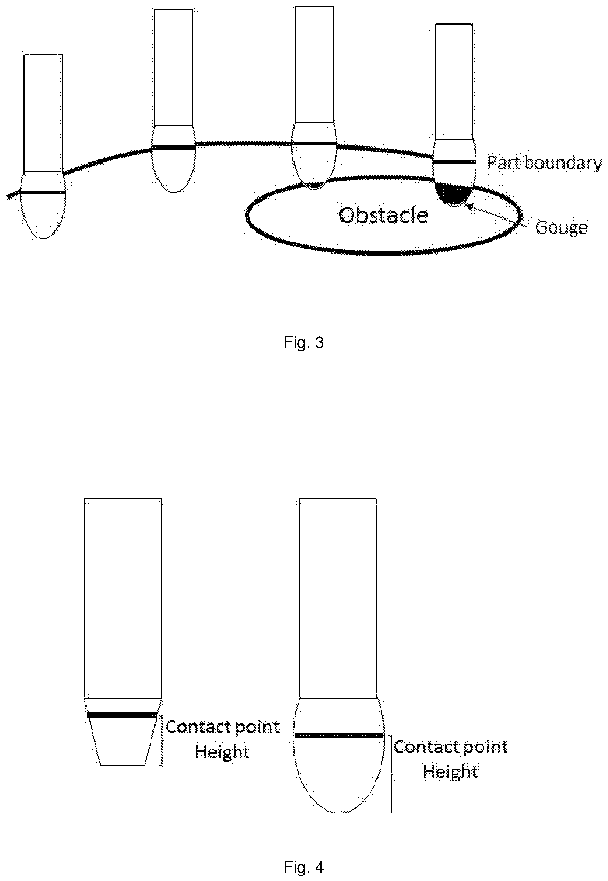

Secondly, gouge or collision may exist between the machining tool and the work piece in normal path generated by offline programming. In some cases, as can be seen in Fig. 2, there may be an extremely large curvature change along the path. Then, the machining tool will gouge the work piece at the points where the radius of the tool contact point (Rₜₒₒₗ) is larger than the radium of the work piece (Rₚₐᵣₜ). While in some other cases, as can be seen in Fig. 3, an obstacle below the path may exist so that collision will exist in some parts of the path.

To resolve the preceding problems, there is a need in the art to develop an improved method for machining a work piece with a tool.

### SUMMARY OF THE INVENTION

The object of the present invention is to provide a novel method and system for machining a work piece by a machining tool, and a robot system using the same, to improve machining efficiency and accuracy. With this solution, high machining efficiency could be achieved as well as collisions could be avoided.

According to one aspect of the invention, there is provided a method for machining a work piece by a machining tool, comprising: defining a customized contact point on the machining tool by setting a contact point height of the machining tool; moving the machining tool against the work piece to apply predefined machining feeds.

According to a preferred embodiment of the present invention, checking a feasibility of the contact point height in a virtual environment, to make sure there is no gouge or collision in its machining path; adjusting the contact point height if failing to pass the checking.

According to a preferred embodiment of the present invention, the contact point height is configured to be changeable in one machining path.

According to a preferred embodiment of the present invention, controlling the feed rate of the machining tool to be constant when changing the contact point height of the machining tool.

According to a preferred embodiment of the present invention, the machining tool is in a revolving shape.

According to the present invention, generating a default contact diameter (CD_{default}) of the machining tool; generating a default movement speed (MS_{default}) of the machining tool; generating a default revolution speed of spindle (RS_{default}) of the machining tool; calculating the actual contact diameter (CD_{actual}) in accordance with the customized contact point; modifying the actual revolution speed of spindle (RS_{actual}) and/or the actual movement speed (MS_{actual}), to remain the feed rate unchanged.

According to a preferred embodiment of the present invention, modifying the actual revolution speed of spindle (RS_{actual}) into (CD_{default} /CD_{actual})^{∗}RS_{default}, if the actual movement speed (MS_{actual}) remains the same.

According to a preferred embodiment of the present invention, modifying the actual movement speed (MS_{actual}) into (CD_{default} - CD_{actual}) ^{∗} RS_{default})/2 + MS_{default}, if the actual revolution speed of spindle (RS_{actual}) remains the same.

According to a preferred embodiment of the present invention, modifying the actual revolution speed of spindle (RS_{actual}) and the actual movement speed (MS_{actual}), to meet the following equation: RS_{default} ^{∗} CD_{default} / 2 + MS_{default} = RS_{actual} ^{∗} CD_{actual} / 2 + MS_{actual}.

According to another aspect of the invention, there is provided a robot system for machining a work piece, including: a manipulator; a machining tool; and a controller, being adapted for controlling the manipulator to operate the machining tool according to the method as described above.

According to another aspect of the invention, there is provided a system for machining a work piece by a machining tool, comprising: a height defining module, configured to define a customized contact point on the machining tool by setting a contact point height of the machining tool; a tool moving module, configured to move the machining tool against the work piece to apply predefined machining feeds.

According to a preferred embodiment of the present invention, the system further comprises: a collision checking module, configured to check a feasibility of the contact point height in a virtual environment, to make sure there is no gouge or collision in its machining path; a height adjusting module, configured to adjust the contact point height if failing to pass the checking.

According to a preferred embodiment of the present invention, the contact point height is configured to be changeable in one machining path.

According to a preferred embodiment of the present invention, the system further comprises: a feed rate controlling module, configured to control the feed rate of the machining tool to be constant when changing the contact point height of the machining tool.

According to a preferred embodiment of the present invention, the machining tool is in a revolving shape.

According to a preferred embodiment of the present invention, the system further comprises: a contact diameter generating module, configured to generate a default contact diameter (CD_{default}) of the machining tool; a movement speed generating module, configured to generate a default movement speed

(MS_{default}) of the machining tool; a revolution speed generating module, configured to generate a default revolution speed of spindle (RS_{default}) of the machining tool; a calculating module, configured to calculate the actual contact diameter (CD_{actual}) in accordance with the customized contact point; a modifying module, configured to modify the actual revolution speed of spindle (RS_{actual}) and/or the actual movement speed (MS_{actual}), to remain the feed rate unchanged.

According to a preferred embodiment of the present invention, the modifying module is configured to modify the actual revolution speed of spindle (RS_{actual}) into (CD_{default} /CD_{actual})^{∗}RS_{default}, if the actual movement speed (MS_{actual}) remains the same.

According to a preferred embodiment of the present invention, the modifying module is configured to modify the actual movement speed (MS_{actual}) into (CD_{default} - CD_{actual}) ^{∗} RS_{default})/2 + MS_{default}, if the actual revolution speed of spindle (RS_{actual}) remains the same.

According to a preferred embodiment of the present invention, the modifying module is configured to modify the actual revolution speed of spindle (RS_{actual}) and the actual movement speed (MS_{actual}), to meet the following equation: ${RS}_{default} * {CD}_{default} / 2 + {MS}_{default} = {RS}_{actual} * {CD}_{actual} / 2 + {MS}_{actual} .$

Compared with the existing prior arts, by using the new solution of flexible contact point, more particularly with the auto-adaptive feed rate, the present invention can achieve several advantages as below.

The present invention is easy to improve efficiency of machining by adjusting the contact height.

The present invention can provide more available options for avoiding gouges and collisions on the path and able to use different contact points for a machining tool.

The present invention can increase offline programming efficiency, and it can also provide more flexible tool path and more reasonable feed rate.

The present invention can avoid tool change and reducing cycle time.

The present invention can improve the machining accuracy.

Other features and advantages of embodiments of the present application will also be understood from the following description of specific exemplary embodiments when read in conjunction with the accompanying drawings, which illustrate, by way of example, the principles of the invention.

### BRIEF DESCRIPTION OF THE DRAWINGS

The above and other features of the present disclosure will become more apparent through detailed explanation on the embodiments as illustrated in the description with reference to the accompanying drawings, throughout which like reference numbers represent same or similar components and wherein:
Fig. 1 shows a section view of two different conventional machining tools;
Fig. 2 shows a first schematic diagram of a conventional tool path of a machining tool;
Fig. 3 shows a second schematic diagram of a conventional tool path of a machining tool;
Fig. 4 shows a section view of two different machining tools according to an embodiment of the present disclosure;
Fig. 5 shows a schematic diagram of machining a work piece by the machining tool according to a first embodiment of the present disclosure;
Fig. 6 shows a schematic diagram of machining a work piece by the machining tool according to a second embodiment of the present disclosure;
Fig. 7 shows a schematic diagram of machining a work piece by the machining tool according to a third embodiment of the present disclosure;
Fig. 8 shows a schematic diagram of machining a work piece by the machining tool according to a fourth embodiment of the present disclosure;
Fig. 9 illustrates a robot system performing the machining process according to an embodiment of present invention.

### DETAILED DESCRIPTION OF PREFERRED EMBODIMENTS

Hereinafter, solutions as provided the present disclosure will be described in details through embodiments with reference to the accompanying drawings. It should be appreciated that these embodiments are presented only to enable those skilled in the art to better understand and implement the present disclosure, not intended to limit the scope of the present disclosure in any manner.

Generally, all terms used in the claims are to be interpreted according to their ordinary meaning in the technical field, unless explicitly defined otherwise herein. All references to "a/an/the/said [element, device, component, means, step, etc]" are to be interpreted openly as referring to at least one instance of said element, device, component, means, unit, step, etc., without excluding a plurality of such devices, components, means, units, steps, etc., unless explicitly stated otherwise. Besides, the indefinite article "a/an" as used herein does not exclude a plurality of such steps, units, modules, devices, and objects, and etc.

In general, embodiments of the present application provide a new method and system for machining a work piece by a machining tool. As will be apparent from the further discussions below, flexible contact point enables users to customize a contact point on a machining tool based on actual requirements so that high machining efficiency could be achieved as well as gouges or collisions could be avoided.

Throughout the descriptions of various embodiments of the present application, repeated descriptions of some similar elements will be omitted.

Next, reference will be made to describe an example of machining a work piece by the machining tool in which the first embodiment of the present disclosure can be implemented. Fig. 4 is a section view of two different machining tools which the present invention can apply to. During the machining process, the machining tool relatively moves against the work piece to apply machining feeds therebetween. Namely the machining tool moves while the work piece keeps still, or the work piece moves while the machining tool keeps still. For example, the tool is shaped like a circular truncated cone or an ellipsoid, as can be seen in Fig. 4. In these situations, the machining tool is in a revolving shape. But it should be noted that the present disclosure is not limit in this regard. Then, a primary motion is provided by rotating the machining tool around its axis and the rotating machining tool removes the material from the contact points at the work piece to generate a desired shape, such as deburring and side-machining. The feed motion is achieved by relative motion of the machining tool and the work piece.

To overcome the above-mentioned shortcomings of using default and fixed contact point, except for the parameters related to the machining tool shape, another parameter contact point height can also be introduced for defining a customized contact point on the tool, as it can be seen in Fig. 4. When the contact height is set for a machining tool, the contact point is certainly defined. Then, the offline programming will use the point to contact and work on the work piece and use the normal of the point to calculate the relative posture for the machining target.

With this solution, users can define a customized contact point on the machining tool by setting a contact point height of the machining tool, and then move the machining tool against the work piece to apply predefined machining feeds.

In addition, a feasibility of the contact point height can be checked in a virtual environment, to make sure there is no gouge or collision in its machining path. User can adjust the contact point height if failing to pass the checking.

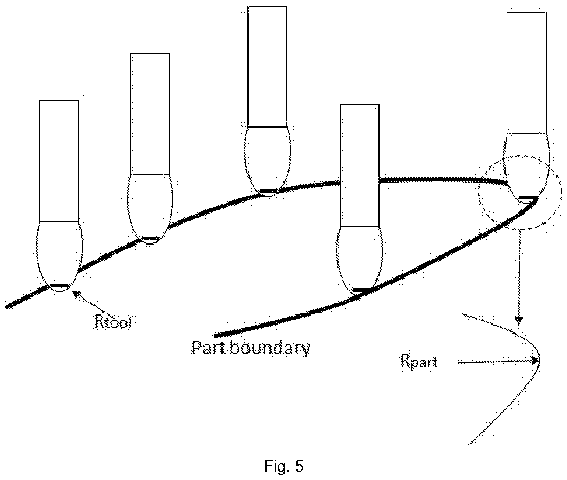

As shown in Fig. 5, there is an extremely large curvature change along the path because of the large curvature change of the work piece boundary. With the default contact point height, the machining tool will gouge the work piece at the points where the radius of the tool contact point (Rₜₒₒₗ) is larger than the radium of the part (Rₚₐᵣₜ). When a lower contact height is set, a smaller contact diameter could be got so that the gouge could be eliminated.

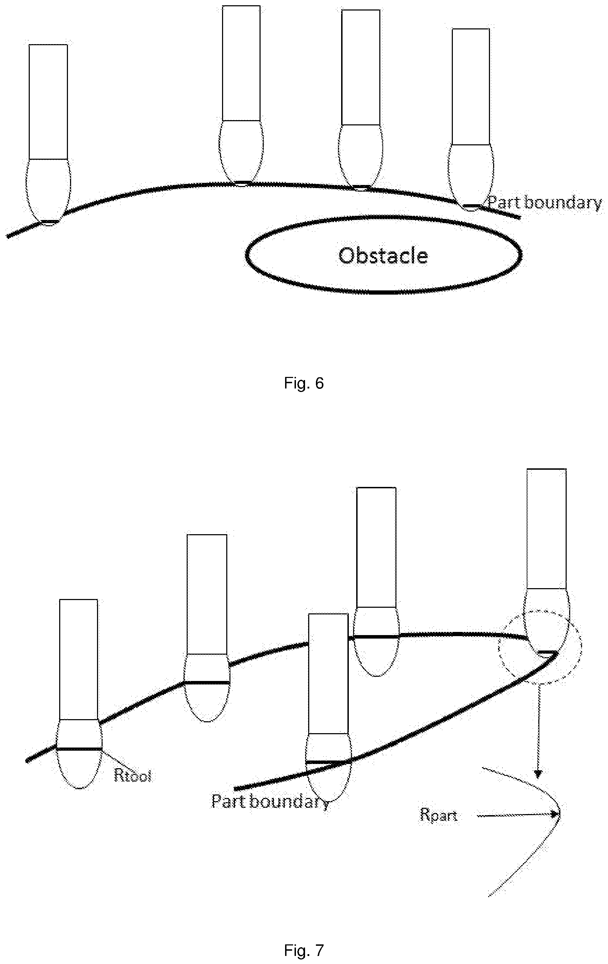

Another example is shown in Fig. 6. An obstacle is close to the machining path, so collision will exist in some parts of the path with the default contact point height. When a lower contact height is set, a smaller contact diameter could be got so that the collisions with obstacles could be eliminated.

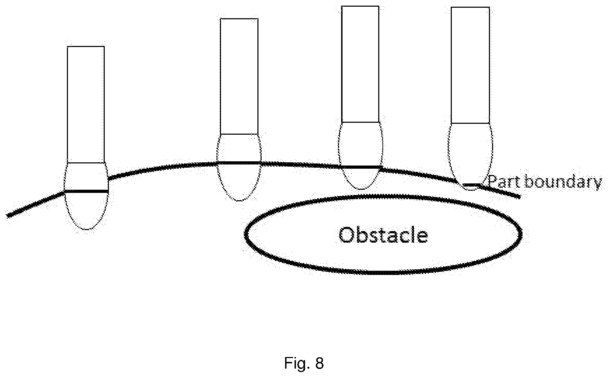

According to the common knowledge of users, the machining efficiency is proportional to the tool diameter. The larger the cutter diameter is, the higher the machining efficiency is achieved. In the cases that have no collisions, users prefer to use as larger contact diameter as possible during the machining, so that they would like to set adaptive contact point in one machining path to achieve higher machining efficiency. For example, as seen in Figs. 7 and 8, the contact point height can be changeable in one machining path. User can set lower contact height for a special purpose to avoid gouges and collisions in partial machining path, but using a larger contact diameter along the rest of the path to achieve high machining efficiency.

Therefore, the present disclosure is advantageous because it is easy to improve machining efficiency of machining by adjusting the contact height according to different environment. Also, it provides more options for avoiding gouges and collisions on the machining path and is able to use different contact points for a tool. So it can increase offline programming efficiency and make tool path more flexible and feed rate more reasonable.

In addition, auto-adaptive feed rate is also introduced to better resolve the preceding problems.

According to an aspect of the present invention, auto-adaptive feed rate is introduced together with the contact point and enables automatic calculation of proper feed rates based on different contact points. With this solution by binding the feed rate with contact height, the machining accuracy becomes better than that using the same feed rate regardless of contact height. This could also reduce programming time since users do not need to set the feed rate manually.

In some embodiments, two parameters Movement Speed and Revolution Speed of Spindle are introduced to represent two feed rate states as shown in Table 1.

**Table 1 Default Contact diameter and default feed rate**

| **Default Contact diameter** | **Default Feed Rate** | |
|---|---|---|
| | **Movement Speed** | **Revolution speed of spindle** |
| CD_{default} | MS_{default} | RS_{default} |

Users first specify a default feed rate for a default contact diameter which is calculated based on the tool shape and contact height parameters, so that the default parameter values are obtained.

The basic idea of auto-adaptive feed rate is keep the velocity all the same when contact with the work piece. Generally, there are three available strategies for automatic calculating the feed rate.

Firstly, as shown in Table 2, user can keep move speed unchangeable, but only adjust revolution speed of spindle as described in Table 2.

**Table 2 Keep move speed**

| **Actual Contact diameter** | **Actual Feed Rate** | |
|---|---|---|
| | **Movement Speed** | **Revolution speed of spindle** |
| CD_{actual} | MS_{default} | (CD_{default}/CD_{actual})*RS_{default} |

Secondly, as shown in Table 3, user can keep revolution speed of spindle unchangeable, but only adjust move speed as described in Table 3.

**Table 3 Keep revolution speed of spindle**

| **Actual Contact diameter** | **Actual Feed Rate** | |
|---|---|---|
| | **Movement Speed** | **Revolution speed of spindle** |
| CD_{actual} | ((CDdefault - CDactual) * RS_{default})/2 + MSdefault | RS_{default} |

Thirdly, user can modify the actual revolution speed of spindle (RS_{actual}) and the actual movement speed (MS_{actual}) at the same time, so as to meet the following equation: RS_{default} ^{∗} CD_{default} / 2 + MS_{default} = RS_{actual} ^{∗} CD_{actual} / 2 + MS_{actual}.

Users may use tools with different contact heights (namely different contact diameters) in process, then the feed rate of machining target can be automatically calculated by the three strategies as described above.

Therefore, the present disclosure is advantageous because users can control the feed rate of the machining tool to be adaptive or constant when changing the contact point height of the machining tool. Thus, the machining accuracy becomes better compared with the same movement speed and same revolution speed of spindle.

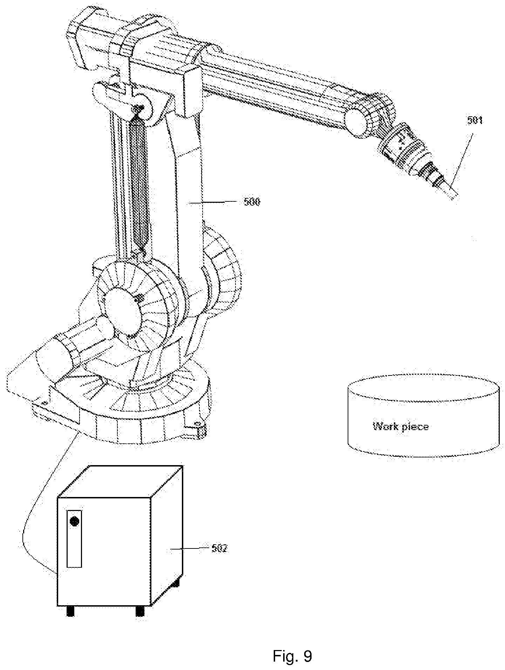

Fig. 9 illustrates a robot system performing the machining process according to an embodiment of present invention. The robot system 5 includes a manipulator 500, a machining tool 501 and a controller 502. The manipulator 500 is arranged to hold the machining tool 501. The controller 502 can be offline programmed to control the manipulator 500 to operate the machining tool 501 according to the method as described above.

Another embodiment of the present application will be further discussed below. A system for controlling a machining of a work piece is also provided. The system comprises: a height defining module, which can define a customized contact point on the machining tool by setting a contact point height of the machining tool; and a tool moving module, which can move the machining tool against the work piece to apply predefined machining feeds.

In some embodiments, the system further comprises: a collision checking module, which can check a feasibility of the contact point height in a virtual environment, to make sure there is no gouge or collision in its machining path; and a height adjusting module, which can adjust the contact point height if failing to pass the checking.

In some embodiments, the contact point height may be changeable in one machining path.

In some embodiments, the system further comprises: a feed rate controlling module, which can control the feed rate of the machining tool to be constant when changing the contact point height of the machining tool.

In some embodiments, the machining tool is in a revolving shape.

The system further comprises: a contact diameter generating module, which can generate a default contact diameter (CD_{default}) of the machining tool; a movement speed generating module, which can generate a default movement speed (MS_{default}) of the machining tool; a revolution speed generating module, which can generate a default revolution speed of spindle (RS_{default}) of the machining tool; a calculating module, which can calculate the actual contact diameter (CD_{actual}) in accordance with the customized contact point; a modifying module, which can modify the actual revolution speed of spindle (RS_{actual}) and/or the actual movement speed (MS_{actual}), to remain the feed rate unchanged.

In some embodiments, the modifying module can modify the actual revolution speed of spindle (RS_{actual}) into (CD_{default}/CD_{actual})^{∗}RS_{default}, if the actual movement speed (MS_{actual}) remains the same.

In some embodiments, the modifying module can modify the actual movement speed (MS_{actual}) into (CD_{default} - CD_{actual}) ^{∗} RS_{default})/2 + MS_{default}, if the actual revolution speed of spindle (RS_{actual}) remains the same.

In some embodiments, the modifying module can modify the actual revolution speed of spindle (RS_{actual}) and the actual movement speed (MS_{actual}), to meet the following equation: RS_{default} ^{∗} CD_{default} / 2 + MS_{default} = RS_{actual} ^{∗} CD_{actual} / 2 + MS_{actual}.

It should be appreciated that the features as described above with reference to Figs. 4-8 are all applicable to the system. Moreover, the components of the system may be a hardware module or a software unit module. For example, in some embodiments, the system may be implemented partially or completely with software and/or firmware, for example, implemented as a computer program product embodied in a computer readable medium. Alternatively or additionally, the system may be implemented partially or completely based on hardware, for example, as an integrated circuit (IC), an application-specific integrated circuit (ASIC), a system on chip (SOC), a field programmable gate array (FPGA), and so forth. The scope of the present disclosure is not limited in this regard.

Hereinabove, embodiments of the present disclosure have been described in details through embodiments with reference to the accompanying drawings. It should be appreciated that, while this specification contains many specific implementation details, these details should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Various modifications, adaptations to the foregoing exemplary embodiments of this disclosure may become apparent to those skilled in the relevant arts in view of the foregoing description, when read in conjunction with the accompanying drawings. Any and all modifications will still fall within the scope of the non-limiting and exemplary embodiments of this disclosure. Furthermore, other embodiments of the disclosures set forth herein will come to mind to one skilled in the art to which these embodiments of the disclosure pertain having the benefit of the teachings presented in the foregoing descriptions and the associated drawings.

Therefore, it is to be understood that the embodiments of the disclosure are not to be limited to the specific embodiments disclosed and that modifications and other embodiments are intended to be included within the scope of the appended claims.

## Claims

1. A method for machining a work piece by a machining tool (501), comprising:
defining a customized contact point on the machining tool (501) by setting a contact point height of the machining tool (501);
moving the machining tool (501) against the work piece to apply predefined machining feeds;
generating a default contact diameter (CD_{default}) of the machining tool (501);
generating a default movement speed (MS_{default}) of the machining tool (501);
generating a default revolution speed of spindle (RS_{default}) of the machining tool (501);
calculating the actual contact diameter (CD_{actual}) in accordance with the customized contact point;
modifying the actual revolution speed of spindle (RS_{actual}) and/or the actual movement speed (MS_{actual}), to keep the feed rate unchanged.

2. The method according to Claim 1, **characterized in**:
checking a feasibility of the contact point height in a virtual environment, to make sure there is no gouge or collision in its machining path;
adjusting the contact point height if failing to pass the checking.

3. The method according to Claim 1, **characterized in that**:
the contact point height is configured to be changeable in one machining path.

4. The method according to Claim 1, **characterized in**:
controlling the feed rate of the machining tool to be constant when changing the contact point height of the machining tool.

5. The method according to Claim 4, **characterized in that**: the machining tool is in a revolving shape.

6. The method according to Claim 1, **characterized in that**:
the actual revolution speed of spindle (RS_{actual}) is modified into (CD_{default} /CD_{actual})^{∗}RS_{default}, if the actual movement speed (MS_{actual}) remains the same;
the actual movement speed (MS_{actual}) is modified into (CD_{default} - CD_{actual}) ^{∗} RS_{default})/2 + MS_{default}, if the actual revolution speed of spindle (RS_{actual}) remains the same; or
the actual revolution speed of spindle (RS_{actual}) and the actual movement speed (MS_{actual}) is modified, to meet the following equation: ${RS}_{default} * {CD}_{default} / 2 + {MS}_{default} = {RS}_{actual} ∗ {CD}_{actual} / 2 + {MS}_{actual} .$

7. A system for machining a work piece by a machining tool (501), comprising:
a height defining module, configured to define a customized contact point on the machining tool (501) by setting a contact point height of the machining tool (501);
a tool moving module, configured to move the machining tool (501) against the work piece to apply predefined machining feeds;
a contact diameter generating module, configured to generate a default contact diameter (CD_{default}) of the machining tool (501);
a movement speed generating module, configured to generate a default movement speed (MS_{default}) of the machining tool (501);
a revolution speed generating module, configured to generate a default revolution speed of spindle (RS_{default}) of the machining tool (501);
a calculating module, configured to calculate the actual contact diameter (CD_{actual}) in accordance with the customized contact point;
a modifying module, configured to modify the actual revolution speed of spindle (RS_{actual}) and/or the actual movement speed (MS_{actual}), to keep the feed rate unchanged.

8. The system according to Claim 7, **characterized in that** the system further comprises:
a collision checking module configured to check a feasibility of the contact point height in a virtual environment, to make sure there is no gouge or collision in its machining path;
a height adjusting module configured to adjust the contact point height if failing to pass the checking.

9. The system according to Claim 8, **characterized in that**:
the contact point height is configured to be changeable in one machining path.

10. The system according to Claim 7, **characterized in that**, the system further comprises:
a feed rate controlling module, configured to control the feed rate of the machining tool to be constant when changing the contact point height of the machining tool.

11. The system according to Claim 10, **characterized in that**:
the machining tool is in a revolving shape.

12. The system according to Claim 11, **characterized in that**:
the modifying module is configured to modify the actual revolution speed of spindle (RS_{actual}) into (CD_{default} /CD_{actual})^{∗}RS_{default}, if the actual movement speed (MS_{actual}) remains the same;
the modifying module is configured to modify the actual movement speed (MS_{actual}) into (CD_{default} - CD_{actual}) ^{∗} RS_{default})/2 + MS_{default}, if the actual revolution speed of spindle (RS_{actual}) remains the same; or
the modifying module is configured to modify the actual revolution speed of spindle (RS_{actual}) and the actual movement speed (MS_{actual}), to meet the following equation: ${RS}_{default} ∗ {CD}_{default} / 2 + {MS}_{default} = {RS}_{actual} {CD}_{actual} / 2 + {MS}_{actual} .$

13. A robot system comprising a system according to any of the claims 7 to 12, for machining a work piece, including: a manipulator; a machining tool (501); and
a controller comprising the modules of any of the claims 7, 8, 10 and 12, the controller being adapted for controlling the manipulator to operate the machining tool (501) according to the method set forth in any of Claims 1 to 6.

## Patentansprüche

1. Verfahren zum Bearbeiten eines Werkstücks durch ein Bearbeitungswerkzeug (501), das Folgendes umfasst:
Definieren eines angepassten Kontaktpunkts am Bearbeitungswerkzeug (501) durch Festlegen einer Kontaktpunkthöhe des Bearbeitungswerkzeugs (501);
Bewegen des Bearbeitungswerkzeugs (501) gegen das Werkstück zum Anwenden von vordefinierten Bearbeitungszufuhren;
Erzeugen eines Standardkontaktdurchmessers (CD_{default}) des Bearbeitungswerkzeugs (501);
Erzeugen einer Standardbewegungsgeschwindigkeit (MS_{default}) des Bearbeitungswerkzeugs (501);
Erzeugen einer Standardumdrehungsgeschwindigkeit der Spindel (RS_{default}) des Bearbeitungswerkzeugs (501);
Berechnen des tatsächlichen Kontaktdurchmessers (CD_{actual}) in Übereinstimmung mit dem angepassten Kontaktpunkt;
Modifizieren der tatsächlichen Umdrehungsgeschwindigkeit der Spindel (RS_{actual}) und/oder der tatsächlichen Bewegungsgeschwindigkeit (MS_{actual}), um die Zufuhrrate unverändert zu halten.

2. Verfahren nach Anspruch 1, **gekennzeichnet durch**:
Prüfen einer Umsetzbarkeit der Kontaktpunkthöhe in einer virtuellen Umgebung, um sicherzustellen, dass keine Delle oder Kollision in seinem Bearbeitungspfad vorhanden ist;
Anpassen der Kontaktpunkthöhe, wenn die Prüfung nicht bestanden wird.

3. Verfahren nach Anspruch 1, **dadurch gekennzeichnet, dass**:
die Kontaktpunkthöhe dazu ausgelegt ist, in einem Bearbeitungspfad änderbar zu sein.

4. Verfahren nach Anspruch 1, **gekennzeichnet durch**:
Steuern, dass die Zufuhrrate des Bearbeitungswerkzeugs konstant ist, wenn die Kontaktpunkthöhe des Bearbeitungswerkzeugs geändert wird.

5. Verfahren nach Anspruch 4, **dadurch gekennzeichnet, dass**:
das Bearbeitungswerkzeug in einer sich drehenden Form ist.

6. Verfahren nach Anspruch 1, **dadurch gekennzeichnet, dass**:
die tatsächliche Umdrehungsgeschwindigkeit der Spindel (RS_{actual}) in (CD_{default}/CD_{actual}) ^{∗}RS_{default} modifiziert wird, wenn die tatsächliche Bewegungsgeschwindigkeit (MS_{actual}) die gleiche bleibt;
die tatsächliche Bewegungsgeschwindigkeit (MS_{actual}) in (CD_{default} - CD_{actual}) ^{∗}RS_{default}/2 + MS_{default} modifiziert wird, wenn die tatsächliche Umdrehungsgeschwindigkeit der Spindel (RS_{actual}) die gleiche bleibt; oder
die tatsächliche Umdrehungsgeschwindigkeit der Spindel (RS_{actual}) und die tatsächliche Bewegungsgeschwindigkeit (MS_{actual}) modifiziert werden, um die folgende Gleichung zu erfüllen: ${RS}_{default} * {CD}_{default} / 2 + {MS}_{default} = {RS}_{actual} * {CD}_{actual} / 2 + {MS}_{actual} .$

7. System zum Bearbeiten eines Werkstücks durch ein Bearbeitungswerkzeug (501), das Folgendes umfasst:
ein Höhendefinitionsmodul, ausgelegt zum Definieren eines angepassten Kontaktpunkts am Bearbeitungswerkzeug (501) durch Festlegen einer Kontaktpunkthöhe des Bearbeitungswerkzeugs (501);
ein Werkzeugbewegungsmodul, ausgelegt zum Bewegen des Bearbeitungswerkzeugs (501) gegen das Werkstück zum Anwenden von vordefinierten Bearbeitungszufuhren;
ein Kontaktdurchmessererzeugungsmodul, ausgelegt zum Erzeugen eines Standardkontaktdurchmessers (CD_{default}) des Bearbeitungswerkzeugs (501);
ein Bewegungsgeschwindigkeitserzeugungsmodul, ausgelegt zum Erzeugen einer Standardbewegungsgeschwindigkeit (MS_{default}) des Bearbeitungswerkzeugs (501);
ein Umdrehungsgeschwindigkeitserzeugungsmodul, ausgelegt zum Erzeugen einer Standardumdrehungsgeschwindigkeit der Spindel (RS_{default}) des Bearbeitungswerkzeugs (501);
ein Berechnungsmodul, ausgelegt zum Berechnen des tatsächlichen Kontaktdurchmessers (CD_{actual}) in Übereinstimmung mit dem angepassten Kontaktpunkt;
ein Modifizierungsmodul, ausgelegt zum Modifizieren der tatsächlichen Umdrehungsgeschwindigkeit der Spindel (RS_{actual}) und/oder der tatsächlichen Bewegungsgeschwindigkeit (MS_{actual}), um die Zufuhrrate unverändert zu halten.

8. System nach Anspruch 7, **dadurch gekennzeichnet, dass** das System ferner Folgendes umfasst:
ein Kollisionsprüfmodul, ausgelegt zum Prüfen einer Umsetzbarkeit der Kontaktpunkthöhe in einer virtuellen Umgebung, um sicherzustellen, dass keine Delle oder Kollision in seinem Bearbeitungspfad vorhanden ist;
ein Höheneinstellmodul, ausgelegt zum Einstellen der Kontaktpunkthöhe, wenn die Prüfung nicht bestanden wird.

9. System nach Anspruch 8, **dadurch gekennzeichnet, dass** die Kontaktpunkthöhe dazu ausgelegt ist, in einem Bearbeitungspfad änderbar zu sein.

10. System nach Anspruch 7, **dadurch gekennzeichnet, dass** das System ferner Folgendes umfasst:
ein Zufuhrratensteuerungsmdul, ausgelegt zum Steuern, dass Zufuhrrate des Bearbeitungswerkzeugs konstant ist, wenn die Kontaktpunkthöhe des Bearbeitungswerkzeugs geändert wird.

11. System nach Anspruch 10, **dadurch gekennzeichnet, dass** das Bearbeitungswerkzeug in einer sich drehenden Form ist.

12. System nach Anspruch 11, **dadurch gekennzeichnet, dass**:
das Modifizierungsmodul ausgelegt ist zum Modifizieren der tatsächlichen Umdrehungsgeschwindigkeit der Spindel (RS_{actual}) in (CD_{default}/CD_{actual}) ^{∗}RS_{default}, wenn die tatsächliche Bewegungsgeschwindigkeit (MS_{actual}) die gleiche bleibt;
das Modifizierungsmodul ausgelegt ist zum Modifizieren der tatsächlichen Bewegungsgeschwindigkeit (MS_{actual}) in (CD_{default} - CD_{actual}) ^{∗}RS_{default}/2 + MS_{default}, wenn die tatsächliche Umdrehungsgeschwindigkeit der Spindel (RS_{actual}) die gleiche bleibt; oder
das Modifizierungsmodul ausgelegt ist zum Modifizieren der tatsächlichen Umdrehungsgeschwindigkeit der Spindel (RS_{actual}) und der tatsächlichen Bewegungsgeschwindigkeit (MS_{actual}), um die folgende Gleichung zu erfüllen: ${RS}_{default} * {CD}_{default} / 2 + {MS}_{default} = {RS}_{actual} {CD}_{actual} / 2 + {MS}_{actual} .$

13. Robotersystem, umfassend ein System nach einem der Ansprüche 7 bis 12, zum Bearbeiten eines Werkstücks, umfassend einen Manipulator; ein Bearbeitungswerkzeug (501); und eine Steuerung, umfassend die Module nach einem der Ansprüche 7, 8, 10 und 12, wobei die Steuerung angepasst ist zum Steuern des Manipulators zum Betreiben des Bearbeitungswerkzeugs (501) gemäß dem Verfahren nach einem der Ansprüche 1 bis 6.

## Revendications

1. Procédé d'usinage d'une pièce à usiner par un outil d'usinage (501), comprenant :
la définition d'un point de contact personnalisé sur l'outil d'usinage (501) par fixation d'une hauteur de point de contact de l'outil d'usinage (501) ;
le déplacement de l'outil d'usinage (501) pour l'amener contre la pièce à usiner dans le but d'appliquer des avances d'usinage prédéfinies ;
la génération d'un diamètre de contact par défaut (CD_{default}) de l'outil d'usinage (501) ;
la génération d'une vitesse de déplacement par défaut (MS_{default}) de l'outil d'usinage (501) ;
la génération d'une vitesse de rotation par défaut de broche (RS_{default}) de l'outil d'usinage (501) ;
le calcul du diamètre de contact effectif (CD_{actual}) conformément au point de contact personnalisé ;
la modification de la vitesse de rotation effective de broche (RS_{actual}) et/ou de la vitesse de déplacement effective (MS_{actual}) dans le but de maintenir le taux d'avance inchangé.

2. Procédé selon la revendication 1, **caractérisé par** :
la vérification d'une faisabilité de la hauteur de point de contact dans un environnement virtuel dans le but d'assurer l'absence d'enfoncement ou de collision dans sa trajectoire d'usinage ;
le réglage de la hauteur de point de contact en cas d'échec de la vérification.

3. Procédé selon la revendication 1, **caractérisé en ce que** :
la hauteur de point de contact est configurée pour pouvoir être changée dans une trajectoire d'usinage.

4. Procédé selon la revendication 1, **caractérisé par** :
la commande du taux d'avance de l'outil d'usinage pour le maintenir constant lors d'un changement de la hauteur de point de contact de l'outil d'usinage.

5. Procédé selon la revendication 4, **caractérisé en ce que** : l'outil d'usinage prend une forme de révolution.

6. Procédé selon la revendication 1, **caractérisé en ce que** :
la vitesse de rotation effective de broche (RS_{actual}) est modifiée pour devenir (CD_{default}/CD_{actual}) ^{∗}RS_{default} si la vitesse de déplacement effective (MS_{actual}) reste la même ;
la vitesse de déplacement effective (MS_{actual}) est modifiée pour devenir (CD_{default} - CD_{actual}) ^{∗}RS_{default}/2 + MS_{default} si la vitesse de rotation effective de broche (RS_{actual}) reste la même ; ou
la vitesse de rotation effective de broche (RS_{actual}) et la vitesse de déplacement effective (MS_{actual}) sont modifiées pour vérifier l'équation suivante : ${RS}_{default} * {CD}_{default} / 2 + {MS}_{default} = {RS}_{actual} * {CD}_{actual} / 2 + {MS}_{actual} .$

7. Système pour l'usinage d'une pièce à usiner par un outil d'usinage (501), comprenant :
un module de définition de hauteur, configuré pour définir un point de contact personnalisé sur l'outil d'usinage (501) en fixant une hauteur de point de contact de l'outil d'usinage (501) ;
un module de déplacement d'outil, configuré pour déplacer l'outil d'usinage (501) pour l'amener contre la pièce à usiner dans le but d'appliquer des avances d'usinage prédéfinies ;
un module de génération de diamètre de contact, configuré pour générer un diamètre de contact par défaut (CD_{default}) de l'outil d'usinage (501) ;
un module de génération de vitesse de déplacement, configuré pour générer une vitesse de déplacement par défaut (MS_{default}) de l'outil d'usinage (501) ;
un module de génération de vitesse de rotation, configuré pour générer une vitesse de rotation par défaut de broche (RS_{default}) de l'outil d'usinage (501) ;
un module de calcul, configuré pour calculer le diamètre de contact effectif (CD_{actual}) conformément au point de contact personnalisé ;
un module de modification, configuré pour modifier la vitesse de rotation effective de broche (RS_{actual}) et/ou la vitesse de déplacement effective (MS_{actual}) dans le but de maintenir le taux d'avance inchangé.

8. Système selon la revendication 7, le système étant **caractérisé en ce qu'**il comprend en outre :
un module de vérification de collision configuré pour vérifier une faisabilité de la hauteur de point de contact dans un environnement virtuel dans le but d'assurer l'absence d'enfoncement ou de collision dans sa trajectoire d'usinage ;
un module de réglage de hauteur configuré pour régler la hauteur de point de contact en cas d'échec de la vérification.

9. Système selon la revendication 8, **caractérisé en ce que** :
la hauteur de point de contact est configurée pour pouvoir être changée dans une trajectoire d'usinage.

10. Système selon la revendication 7, le système étant **caractérisé en ce qu'**il comprend en outre :
un module de commande de taux d'avance, configuré pour commander le taux d'avance de l'outil d'usinage pour le maintenir constant lors d'un changement de la hauteur de point de contact de l'outil d'usinage.

11. Système selon la revendication 10, **caractérisé en ce que** :
l'outil d'usinage prend une forme de révolution.

12. Système selon la revendication 11, **caractérisé en ce que** :
le module de modification est configuré pour modifier la vitesse de rotation effective de broche (RS_{actual}) pour qu'elle devienne (CD_{default}/CD_{actual}) ^{∗}RS_{default} si la vitesse de déplacement effective (MS_{actual}) reste la même ;
le module de modification est configuré pour modifier la vitesse de déplacement effective (MS_{actual}) pour qu'elle devienne (CD_{default} - CD_{actual}) ^{∗}RS_{default}/2 + MS_{default} si la vitesse de rotation effective de broche (RS_{actual}) reste la même ; ou
le module de modification est configuré pour modifier la vitesse de rotation effective de broche (RS_{actual}) et la vitesse de déplacement effective (MS_{actual}) pour qu'elles vérifient l'équation suivante : ${RS}_{default} * {CD}_{default} / 2 + {MS}_{default} = {RS}_{actual} {CD}_{actual} / 2 + {MS}_{actual} .$

13. Système robot, comprenant un système selon l'une quelconque des revendications 7 à 12, pour l'usinage d'une pièce à usiner, comportant : un manipulateur, un outil d'usinage (501) ; et
une unité de commande comprenant les modules de l'une quelconque des revendications 7, 8, 10 et 12, l'unité de commande étant adaptée à commander au manipulateur de faire fonctionner l'outil d'usinage (501) selon le procédé exposé dans l'une quelconque des revendications 1 à 6.
